# EUROPÄISCHE PATENTSCHRIFT

(11) **EP 0 436 906 B1**
(45) Veröffentlichungstag und Bekanntmachung des Hinweises auf die Patenterteilung: **02.03.1994**
(21) Anmeldenummer: 90125050.6
(22) Anmeldetag: 20.12.1990
(51) Int. Cl.: F16D 65/16, F16D 65/56

(54) **Betätigungsvorrichtung für eine Fahrzeugbremse, insbes. Scheibenbremse**
Actuating device for a vehicle brake, especially disc brake
Dispositif d'actionnement pour frein de véhicule, notamment frein à disque

(30) Priorität: 11.01.1990 DE 9000257 U
(43) Veröffentlichungstag der Anmeldung: 17.07.1991
(73) Patentinhaber: LUCAS INDUSTRIES PUBLIC LIMITED COMPANY, Solihull, West Midlands B91 3TX (GB)
(72) Erfinder: Mayer, Manfred, W-5569 Gillenfeld (DE)
(74) Vertreter: Goetz, Rupert, Dipl.-Ing.

(56) Entgegenhaltungen:
- EP-A- 0 190 453
- WO-A-90/08270
- BE-A- 653 630
- DE-A- 2 408 706
- DE-C- 2 316 926
- DE-C- 2 438 460
- FR-A- 1 017 551
- FR-A- 1 240 143
- GB-A- 2 155 126
- US-A- 3 991 859

## Beschreibung

Die Erfindung betrifft eine Betätigungsvorrichtung für eine Fahrzeugbremse, insbes. Scheibenbremse, mit
- einem Gehäuse, das einen Gehäuseboden und einen Gehäusemantel mit einer zur Bremse hin offenen Zylinderbohrung aufweist,
- einem Kolben, der zum Betätigen der Bremse in der Zylinderbohrung hydraulisch verschiebbar ist,
- einer Welle für mechanische Feststellbremsungen, die im Gehäuseboden, gleichachsig mit dem Kolben, drehbar gelagert ist,
- zwei Rampenanordnungen, von denen eine gehäusefest ist und die andere mittels der Welle drehbar und dadurch axial vom Gehäuseboden weg verstellbar ist,
- einem Paar Strebenteile, die so miteinander verschraubt sind, daß sie eine nachstellbare Strebe zwischen der axial verstellbaren Rampenanordnung und dem Kolben bilden,
- einer Rückstellfeder, die mit axialer Vorspannung zwischen einem gehäusefesten Widerlager und einem Widerlager an einem der beiden Strebenteile angeordnet und bestrebt ist, die verstellbare Rampenanordnung in einer Ruhestellung zu halten, und
- einem Axialdrucklager zum Übertragen axialer Betätigungskräfte von der verstellbaren Rampenanordnung auf das Widerlager.

Bei bekannten Betätigungsvorrichtungen dieser Gattung (z.B. aus DE-A-24 08 706) ist das Axialdrucklager ein Nadellager. Anzahl und Größe der Nadeln sind so gewählt, daß die an den Nadeln und den zugegehörigen Wälzflächen des Axialdrucklagers bei mechanischer Betätigung im Höchstfall auftretenden Flächenpressungen erheblich unter den zulässigen Belastungen liegen. Dennoch sind bei einigen Betätigungsvorrichtungen schon nach verhältnismäßig kurzer Benutzungsdauer Beschädigungen am Axialdrucklager festgestellt worden, die bisher nicht erklärbar waren.

Die Erfindung beruht auf der Erkenntnis, daß die festgestellten Beschädigungen mit Achsfluchtungsfehlern zwischen der Welle für mechanische Feststellbremsungen und den beiden Strebenteilen zusammenhängen. Für die festgestellten Schäden am Axialdrucklager sind wider Erwarten die bei mechanischen Betätigungen auftretenden axialen Kräfte, für deren Übertragung das Axialdrucklager an sich vorgesehen ist, nicht allein verantwortlich. Auch das Rückstellen der Betätigungsvorrichtung durch Kräfte der Rückstellfeder kann wesentlich zu Beschädigungen des Axialdrucklagers beitragen, wenn die Welle mit den beiden Strebenteilen nicht genau fluchtet.

Der Erfindung liegt die Aufgabe zugrunde, die Gefahr solcher Beschädigungen selbst dann zu vermeiden, wenn mit nennenswerten Achsfluchtungsfehlern gerechnet werden muß und die Rückstellfeder mit erheblicher Vorspannung eingebaut ist, die für sich alleine ausreicht, um eine sichere Rückstellung der verstellbaren Rampenanordnung nach jeder mechanischen Bremsbetätigung zu gewährleisten.

Die Aufgabe ist erfindungsgemäß ausgehend von einer Betätigungsvorrichtung der eingangs beschriebenen Gattung dadurch gelöst, daß das Axialdrucklager eine Gleitlagerscheibe aufweist, die zwischen der verstellbaren Rampenanordnung und dem Widerlager angeordnet, an einem dieser beiden Bauteile zentriert ist und mindestens an einer Seite, die einem dieser Bauteile zugewandt ist, eine Beschichtung aus einem Werkstoff mit guten Gleiteigenschaften aufweist.

Vorteilhafte Weiterbildungen der Erfindung ergeben sich aus den Unteransprüchen.

Zwei Ausführungsbeispiele der Erfindung werden im folgenden mit weiteren Einzelheiten anhand schematischer Zeichnungen erläutert. Es zeigen:
- Fig. 1: einen axialen Längsschnitt durch eine erfindungsgemäße Betätigungsvorrichtung;
- Fig. 2: einen stark vergrößerten Ausschnitt aus Fig. 1; und
- Fig. 3: einen entsprechenden Ausschnitt aus einem axialen Längsschnitt einer abgewandelten Betätigungsvorrichtung.

Beide dargestellten Betätigungsvorrichtungen haben ein Gehäuse 20, das beispielsweise mit einem Schwimmsattel einer nicht dargestellten Teilbelag-Scheibenbremse in einem Stück gegossen ist. Das Gehäuse 20 hat einen Gehäuseboden 22 und einen Gehäusemantel 24, in dem eine Zylinderbohrung 26 sowie ein Einlaßkanal 28 zum Anschließen an einen Hauptbremszylinder ausgebildet sind. In der Zylinderbohrung 26 ist ein becherförmiger Kolben 30 geführt, der eine geschlossene äußere Stirnwand 32 mit einer Anlagefläche für eine Bremsbacke aufweist.

An der Rückseite des Gehäusebodens 22 ist ein nach hinten offener ringförmiger Ansatz 33 ausgebildet. Im Gehäuseboden 22 ist gleichachsig mit dem Kolben 30 eine Welle 34 für mechanische Bremsbetätigungen in einer Lagerbüchse 36 drehbar und axial verschiebbar gelagert. Am äußeren Ende der Welle 34 ist ein Hebel 38 befestigt, der in üblicher Weise, beispielsweise mittels eines Bowdenzugs, mit einem Feststellbremshebel oder -pedal verbunden ist. In dem ringförmigen Ansatz 33 ist eine Dichtung 39 befestigt, die gegen die Welle 34 und gegen den Hebel 38 abdichtet.

An der Innenseite des Gehäusebodens 22 liegt eine gehäusefeste Rampenanordnung 40 in Gestalt einer ringförmigen Platte an, die auf die Welle 34 aufgeschoben, an ihr zentriert und durch einen Stift 42 gegen Drehen gesichert ist. Der Stift 42 ist in ein achsparalleles Sackloch 44 im Gehäuseboden 22 eingeschlagen und greift in ein in radialer Richtung längliches Loch 45 in der gehäusefesten Rampenanordnung 40 ein.

An der gehäusefesten Rampenanordnung 40 sind drei in Umfangsrichtung langgestreckte, wannenartige Rampen 46 ausgebildet, die je einen kugelförmigen Spreizkörper 48 aufnehmen. Die Spreizkörper 48 wirken mit je einer entsprechenden Rampe 49 einer ebenfalls ringscheibenförmigen verstellbaren Rampenanordnung 50 zusammen. Die verstellbare Rampenanordnung 50 ist mit der Welle 34 einstückig ausgebildet und stützt sich in axialer Richtung gegen von den Spreizkörpern 48 ausgeübten Druck über ein Axialdrucklager 56 an einem Widerlager 58 ab, das an einem bolzenförmigen Strebenteil 60 ausgebildet ist.

Das bolzenförmige Strebenteil 60 ist mittels einer Steilgewindepaarung 62, die selbsthemmungsfrei ist und ein genau festgelegtes Gewindespiel hat, mit einem hülsenförmigen Strebenteil 64 verschraubt und bildet mit diesem zusammen eine gleichachsig mit dem Kolben 30 und der Welle 34 angeordnete Strebe, deren wirksame Länge entsprechend dem allmählich fortschreitenden Belagverschleiß der Bremse vergrößerbar ist. Das hülsenförmige Strebenteil 64 ist als Hilfskolben in einer entsprechenden Hilfszylinderbohrung 66 im Kolben 30 verschiebbar geführt.

Das der Stirnwand 32 zugewandte Ende des hülsenförmigen Strebenteils 64 ist durch eine Bodenplatte 68 dicht verschlossen. Der durch diese Bodenplatte 68 und die Stirnwand 32 begrenzte Teil der Hilfszylinderbohrung 66 ist, damit er stets drucklos bleibt, durch einen radialen Entlastungskanal 70 mit einer äußeren Nut 72 des Kolbens 30 verbunden. In der Nut 72 ist ein Ende eines Faltenbalges 74 aufgenommen, der das aus der Zylinderbohrung 26 herausragende Ende des Kolbens 30 mit dem Gehäuse 20 verbindet und dadurch die Zylinderbohrung 26 vor Verschmutzung schützt.

Am hülsenförmigen Strebenteil 64 ist ein konischer Flansch 76 ausgebildet, dem ein Innenkonus 78 im Kolben 30 zugeordnet ist. Innerhalb des Kolbens 30 ist eine Federscheibenanordnung 80 mit axialer Vorspannung zwischen dem Flansch 76 und einem in den Kolben 30 eingerasteten Sicherungsring 82 angeordnet. Die Federscheibenanordnung 80 hält normalerweise den Flansch 76 am Innenkonus 78 anliegend und verhindert dadurch eine Drehung des hülsenförmigen Strebenteils 64 gegenüber dem Kolben 30. Der Kolben 30 ist seinerseits durch übliche Mittel, beispielsweise durch sein Zusammenwirken mit der zugehörigen Bremsbacke, normalerweise daran gehindert, sich zu drehen.

Innerhalb der Zylinderbohrung 26 - und weitgehend innerhalb des becherförmigen Kolbens 30 - ist ein hülsen- oder käfigartiger Einsatz 84 angeordnet, der am Gehäuse 20 gegen Axialverschiebung sowie gegen Drehung befestigt ist. Der Einsatz 84 ist - beispielsweise als Tiefziehteil aus Blech - so gestaltet, daß der bolzenförmige Strebenteil 60 durch den Einsatz 84 gegen Drehen gesichert ist, ohne dadurch an Axialverschiebungen gehindert zu sein. Bei dem dargestellten Beispiel hat der Einsatz 84 drei Längsnuten 86, in die je ein radialer Vorsprung 88 des Widerlagers 58 eingreift.

An der vom Axialdrucklager 56 abgewandten Seite des Widerlagers 58 stützt sich eine Rückstellfeder 90, im dargestellten Beispiel eine schraubenförmige Drahtfeder, mit einem Ende ab; ihr anderes Ende ist an einem gehäusefesten Widerlager 92 abgestützt, das von einem radial nach innen ragenden Flansch des Einsatzes 84 gebildet ist. Die Rückstellfeder 90 ist mit einer bestimmten Kraft von beispielsweise 50 kp vorgespannt, so daß sie bestrebt ist, die verstellbare Rampenanordnung 50 in ihrer der gehäusefesten Rampenanordnung 40 am engsten benachbarten Stellung, der Ruhestellung, zu halten.

Der Einsatz 84 hat für seine Befestigung mehrere radial nach außen abgekantete Lappen 94, die hinter einen normgemäßen, radial federnden Befestigungsring 96 greifen, der hinter einer Innenschulter 98 nahe dem Übergang zwischen der Zylinderbohrung 26 und dem Gehäuseboden 22 eingerastet ist. Die gehäusefeste Rampenanordnung 40 hat drei radiale Vorsprünge 100, die in je eine Längsnut des Einsatzes 84 eingreifen, so daß dieser daran gehindert ist, sich zu drehen. Schließlich hat der Einsatz 84 an seinem vom Widerlager 92 entfernten Ende mehrere radial nach innen umgebogene Lappen 102, die hinter die gehäusefeste Rampenanordnung 40 greifen.

Die gehäusefeste Rampenanordnung 40 ist also mit der axial beweglichen und drehbaren Rampenanordnung 50 sowie dem bolzenförmigen Strebenteil 60, dem Axialdrucklager 56 und der Rückstellfeder 90 zu einer Baugruppe vereinigt, die außerhalb des Gehäuses 20 zusammengesetzt und als Ganzes eingebaut wird.

Das Axialdrucklager 56 hat als druckübertragendes Bauteil zwischen der verstellbaren Rampenanordnung 50 und dem Widerlager 58 eine kreisförmige Gleitlagerscheibe 104 aus Stahlblech mit einer Beschichtung 106 aus Polytetrafluorethylen, in die ein Blei-Kupfer- Gemisch eingelagert ist. Die beiden dargestellten Ausführungsbeispiele unterscheiden sich voneinander in der Gestaltung und Zentrierung der Gleitlagerscheibe.

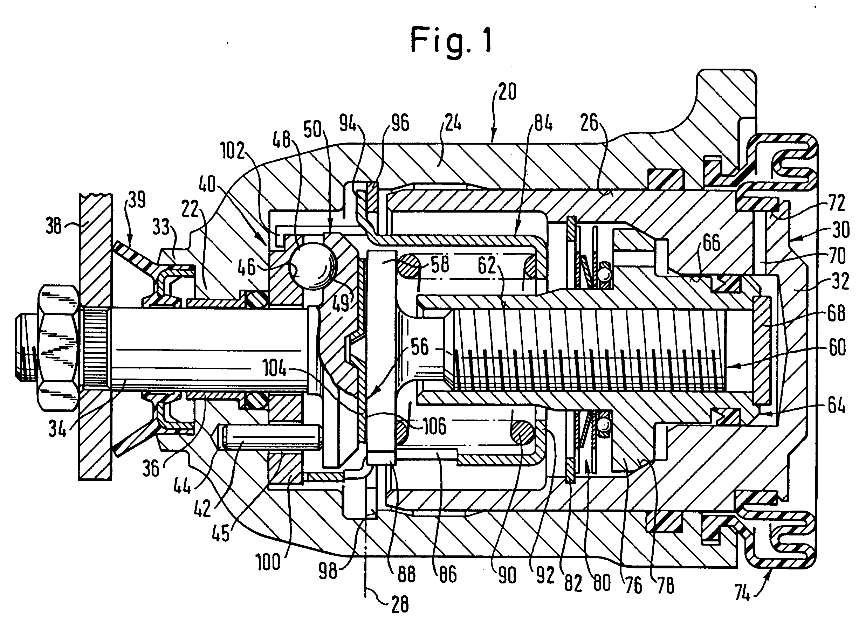

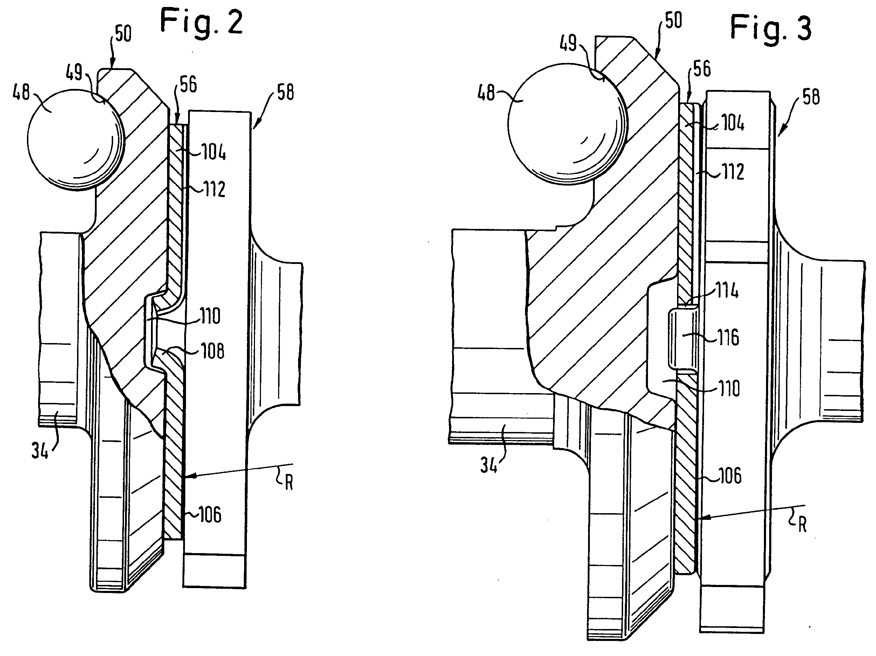

Gemäß Fig. 1 und 2 hat die Gleitlagerscheibe 104 einen mittigen Vorsprung 108, der mit einem kleinen radialen Spiel in eine entsprechende zentrale Aussparung 110 der verstellbaren Rampenanordnung 50 eingreift, wodurch die Gleitlagerscheibe 104 zentriert ist. Der mittige Vorsprung 108 ist durch einen Prägevorgang entstanden, der auch als Durchstellen bezeichnet wird und innerhalb des Vorsprungs 108 einen kegelstumpfförmigen Durchbruch zurückläßt. Die Beschichtung 106 ist dem Widerlager 58 zugewandt und ist durch drei in gleichmäßigen Winkelabständen sternförmig angeordnete radiale Nuten 112 unterbrochen, die sich vom radial äußeren Rand der Gleitlagerscheibe 104 bis in das Innere des mittigen Vorsprungs 108 erstrecken und somit auch die zentrale Aussparung 110 der verstellbaren Rampenanordnung 50 erreichen.

Gemäß Fig. 3 hat die Gleitlagerscheibe 104 eine kreisförmige zentrale Aussparung 114, in die ein am Widerlager 58 ausgebildeter axialer Zapfen 116 mit einem kleinen radialen Spiel eingreift. Der Zapfen 116 erstreckt sich durch die Gleitlagerscheibe 114 hindurch in die zentrale Aussparung 110 der verstellbaren Rampenanordnung 50, ohne diese zu berühren.

Das folgende gilt wieder für beide dargestellten Ausführungsformen in gleicher Weise:

Wenn die Betätigungsvorrichtung in der üblichen Weise mit Bremsflüssigkeit gefüllt wird, sorgen die radialen Nuten 112 für eine vollständige Entlüftung der zentralen Aussparung 110. Dadurch wird die Gefahr vermieden, daß zwischen der verstellbaren Rampenanordnung 50 und dem Widerlager 58 eine Luftblase eingeschlossen wird, die kompressibel ist, also einen Pedalwegverlust hervorruft, und außerdem im Betrieb verhindern könnte, daß die miteinander zusammenwirkenden Flächen des Widerlagers 58 und der Beschichtung 106 von der Bremsflüssigkeit geschmiert werden.

Die am Widerlager 58 ausgebildete Anlagefläche für die Gleitlagerscheibe 104 hat eine konvexe sphärische Wölbung mit einem Radius R von 800 mm bei einem Außendurchmesser der Gleitlagerscheibe 104 von etwa 22 mm. Der Radius R der Wölbung ist also ungefähr 35 bis 38 mal so groß wie der Außendurchmesser der Gleitlagerscheibe 104. Diese Wölbung, der sich die Gleitlagerscheibe 104 bei Belastung anpaßt, verhindert, daß das Widerlager 58 sich gegen die Rampenanordnung 50 verkantet, da ein Achsfluchtungsfehler zwischen beiden infolge von Herstellungsungenauigkeiten nicht ganz zu vermeiden ist.

Wenn die Bremse mechanisch betätigt werden soll, beispielsweise für eine Feststellbremsung, dann wird die Welle 34 mittels des Hebels 38 gedreht. Infolgedessen laufen die Spreizkörper 48 auf die Rampen 46 der beiden Rampenanordnungen 40 und 50 auf und drücken die verstellbare Rampenanordnung 50 nach vorne, in den Zeichnungen nach rechts. Dabei übt die verstellbare Rampenanordnung 50 über das Axialdrucklager 56 eine axiale Druckkraft auf das bolzenförmige Strebenteil 60 aus; diese Kraft wird über die Steilgewindepaarung 62 nach Überwindung des Gewindespiels auf das hülsenförmige Strebenteil 64 und von diesem über dessen konischen Flansch 76 auf den Innenkonus 78, und somit auf den Kolben 30, übertragen. Dabei ist das hülsenförmige Strebenteil 64 an einer Drehung gehindert. Die beiden Strebenteile 60 und 64 bilden somit bei mechanischer Betätigung eine vollständig starre Strebe, die sich zusammen mit der Welle 34 und dem Axialdrucklager 56 nach vorne bewegt. Dabei können diese Bauteile Axialkräfte in der Größenordnung von bis zu 2 t übertragen, ohne beschädigt zu werden.

Die Wirkungsweise bei hydraulischer Betätigung und beim Nachstellen kann als bekannt vorausgesetzt werden und bedarf im vorliegenden Zusammenhang keiner Erläuterung.

## Patentansprüche

1. Betätigungsvorrichtung für eine Fahrzeugbremse, insbes. Scheibenbremse, mit
- einem Gehäuse (20), das einen Gehäuseboden (22) und einen Gehäusemantel (24) mit einer zur Bremse hin offenen Zylinderbohrung (26) aufweist,
- einem Kolben (30), der zum Betätigen der Bremse in der Zylinderbohrung (26) hydraulisch verschiebbar ist,
- einer Welle (34) für mechanische Feststellbremsungen, die im Gehäuseboden (22), gleichachsig mit dem Kolben (30), drehbar gelagert ist,
- zwei Rampenanordnungen (40, 50), von denen eine (40) gehäusefest ist und die andere (50) mittels der Welle (34) drehbar und dadurch axial vom Gehäuseboden (22) weg verstellbar ist,
- einem Paar Strebenteile (60, 64), die so miteinander verschraubt sind, daß sie eine nachstellbare Strebe zwischen der axial verstellbaren Rampenanordnung (50) und dem Kolben (30) bilden,
- einer Rückstellfeder (90), die mit axialer Vorspannung zwischen einem gehäusefesten Widerlager (92) und einem Widerlager (58) an einem der beiden Strebenteile (60) angeordnet und bestrebt ist, die verstellbare Rampenanordnung (50) in einer Ruhestellung zu halten, und
- einem Axialdrucklager (56) zum Übertragen axialer Betätigungskräfte von der verstellbaren Rampenanordnung (50) auf das Widerlager (58),
dadurch **gekennzeichnet,** daß das Axialdrucklager (56) eine Gleitlagerscheibe (104) aufweist, die zwischen der verstellbaren Rampenanordnung (50) und dem Widerlager (58) angeordnet, an einem dieser beiden Bauteile (50, 58) zentriert ist und mindestens an einer Seite, die einem dieser Bauteile zugewandt ist, eine Beschichtung (106) aus einem Werkstoff mit guten Gleiteigenschaften aufweist.

2. Betätigungsvorrichtung nach Anspruch 1,
dadurch **gekennzeichnet,** daß die Gleitlagerscheibe (104) für ihre Zentrierung einen zentralen Vorsprung (108) aufweist, der in eine zentrale Aussparung (110) eines der beiden genannten Bauteile (50, 58) eingreift.

3. Betätigungsvorrichtung nach Anspruch 2,
dadurch **gekennzeichnet,** daß die Beschichtung (106) dem anderen der beiden genannten Bauteile (50, 58) zugewandt ist.

4. Betätigungsvorrichtung nach Anspruch 1,
dadurch **gekennzeichnet,** daß die Gleitlagerscheibe (104) für ihre Zentrierung eine zentrale Aussparung (114) aufweist, in die ein Zapfen (116) eines der beiden genannten Bauteile (50, 58) eingreift.

5. Betätigungsvorrichtung nach Anspruch 4,
dadurch **gekennzeichnet,** daß die Beschichtung (106) dem Bauteil (58) zugewandt ist, an dem der Zapfen (116) ausgebildet ist.

6. Betätigungsvorrichtung nach einem der Ansprüche 2 bis 5,
dadurch **gekennzeichnet,** daß die Beschichtung (106) durch mindestens drei radiale Nuten (112) unterbrochen ist, die sich vom radial äußeren Rand der Gleitlagerscheibe (104) bis zu der zentralen Aussparung (110; 114) erstrecken.

7. Betätigungsvorrichtung nach einem der Ansprüche 1 bis 6,
dadurch **gekennzeichnet,** daß die Beschichtung (106) aus Polytetrafluorethylen besteht, in das ein Blei-Kupfer-Gemisch eingelagert ist.

8. Betätigungsvorrichtung nach einem der Ansprüche 1 bis 7,
dadurch **gekennzeichnet,** daß von den beiden genannten Bauteilen (50, 58) dasjenige (58), das mit der Beschichtung (106) zusammenwirkt, eine konvexe sphärische Wölbung aufweist.

## Claims

1. An actuator for a vehicle brake, especially a disc brake, comprising
- a casing (20) which includes a bottom (22) and a shell (24) formed with a cylindrical bore (26) which is open towards the brake,
- a piston (30) which is displaceable hydraulically in the cylindrical bore (26) to actuate the brake,
- a shaft (34) for mechanical parking brake applications which is rotatably supported in the bottom (22) of the casing and extends coaxially with the piston (30),
- two ramp assemblies (40, 50), one (40) being fixed to the casing and the other one (50) being rotatable by means of the shaft (34) and, thereby, axially adjustable away from the bottom (22) of the casing,
- a pair of strut members (60, 64) which are mutually threaded together so as to present an adjustable strut between the axially adjustable ramp assembly (50) and the piston (30),
- a return spring (90) which is seated under axial bias between an abutment (92) fixed to the casing and an abutment (58) provided at one (60) of the two strut members and which tends to keep the adjustable ramp assembly (50) in an inoperative position, and
- a thrust bearing (56) to transfer axial actuating forces from the adjustable ramp assembly (50) to the abutment (58), **characterized** in that the thrust bearing (56) comprises a sliding bearing plate (104) which is disposed between the adjustable ramp assembly (50) and the abutment (58) and is centered on one of these two structural members (50, 58), being provided at least at one side which faces one of these structural members with a coating (106) made of a material having good sliding properties.

2. The actuator as claimed in claim 1, characterized in that, for its centering, the sliding bearing plate (104) has a central projection (108) which fits into a central recess (110) formed in one of said two structural members (50, 58).

3. The actuator as claimed in claim 2, characterized in that the coating (106) faces the other one of said two structural members (50, 58).

4. The actuator as claimed in claim 1, characterized in that, for its centering, the sliding bearing plate (104) has a central recess (114) which is engaged by a pin (116) formed on one of said two structural members (50, 58).

5. The actuator as claimed in claim 4, characterized in that the coating (106) faces the structural member (58) which is formed with the pin (116).

6. The actuator as claimed in any one of claims 2 to 5, characterized in that the coating (106) is interrupted by at least three radial grooves (112) which extend from the radially outer edge of the sliding bearing plate (104) to the central recess (110; 114).

7. The actuator as claimed in any one of claims 1 to 6, characterized in that the coating (106) consists of polytetrafluoroethylene in which a lead-copper mixture is embedded.

8. The actuator as claimed in any one of claims 1 to 7, characterized in that of said two structural members (50, 58) the one (58) which cooperates with the coating (106) has a convex, spherical curvature.

## Revendications

1. Dispositif d'actionnement pour frein de véhicule, notamment pour frein à disque, comprenant
- un corps (20) qui présente un fond (22) de corps et une paroi latérale (24) de corps présentant un alésage cylindrique (26) qui s'ouvre vers le frein,
- un piston (30) qui peut être poussé hydrauliquement dans l'alésage (26) du cylindre pour l'actionnement du frein,
- un arbre (34) pour le freinage de stationnement mécanique, qui tourillonne dans le fond (22) du corps, coaxialement au piston (30),
- deux organes à rampe (40, 50), dont l'un (40) est solidaire du corps et l'autre (50) peut être tourné au moyen de l'arbre (34) et être ainsi éloigné axialement du fond (22) du corps,
- une paire de parties d'entretoise (60, 64) qui sont vissées l'une dans l'autre de manière à former une entretoise réglable entre l'organe à rampe (50) mobile dans la direction axiale et le piston (30),
- un ressort de rappel (90) qui est disposé avec précontrainte axiale entre un appui (92) solidaire du corps et un appui (58) prévu sur l'une des deux parties de l'entretoise, et qui tend à maintenir l'organe à rampe mobile (50) dans une position de repos, et
- un palier de pression axiale (56) destiné à transmettre les efforts d'actionnement axiaux de l'organe à rampe mobile (50) à l'appui (58),
caractérisé en ce que le palier de pression axiale (56) présente un disque de palier lisse (104) qui est disposé entre l'organe à rampe mobile (50) et l'appui (58), est centré sur l'un de ces deux éléments (50, 58) et présente, au moins sur un côté qui regarde vers l'un de ces éléments, un revêtement (106) fait d'une matière possédant de bonnes propriétés de glissement.

2. Dispositif d'actionnement selon la revendication 1,
caractérisé en ce que, pour son centrage, le disque de palier lisse (104) présente un bossage central (108) qui s'engage dans un évidement central (110) de l'un des deux éléments précités (50, 58).

3. Dispositif d'actionnement selon la revendication 2,
caractérisé en ce que le revêtement (106) est dirigé vers l'autre des deux éléments précités (50, 58).

4. Dispositif d'actionnement selon la revendication 1,
caractérisé en ce que, pour son centrage, le disque de palier lisse (104) présente un évidement central (114) dans lequel s'engage un tourillon (116) de l'un des deux éléments (50, 58).

5. Dispositif d'actionnement selon la revendication 4,
caractérisé en ce que le revêtement (106) fait face vers l'élément (58) sur lequel est formé le tourillon (116).

6. Dispositif d'actionnement selon une des revendications 2 à 5,
caractérisé en ce que le revêtement (106) est interrompu par trois rainures radiales (112) qui s'étendent du bord radialement extérieur du disque de palier lisse (104) jusqu'à l'évidement central (110 ; 114).

7. Dispositif d'actionnement selon une des revendications 1 à 6,
caractérisé en ce que le revêtement (106) est fait de polytétrafluoréthylène dans lequel est incorporé un mélange de plomb cuivre.

8. Dispositif d'actionnement selon une des revendications 1 à 7,
caractérisé en ce que, des deux éléments précités (50, 58), celui (58) qui coopère avec le revêtement (106) présente une courbure convexe sphérique.
